# EUROPEAN PATENT SPECIFICATION

(11) **EP 1 082 245 B1**
(45) Date of publication and mention of the grant of the patent: **07.01.2004**
(21) Application number: 98902878.2
(22) Date of filing: 28.01.1998
(51) Int. Cl.: B60T 17/22

(54) **CHECK INSTALLATIONS FOR A VEHICLE BRAKE SYSTEM**
KONTROLLEINRICHTUNGEN FÜR EIN FAHRZEUGBREMSSYSTEM
DISPOSITIFS DE CONTROLE POUR UN SYSTEME DE FREINAGE D'AUTOMOBILE

(43) Date of publication of application: 14.03.2001
(73) Proprietor: Lee, Joo Min, Vancouver, British Columbia V6A 2Z7 (CA)
(72) Inventor: Lee, Joo Min, Vancouver, British Columbia V6A 2Z7 (CA)
(74) Representative: Babeluk, Michael, Dipl.-Ing. Mag.
(86) International application number: PCT/CA1998/000054
(87) International publication number: WO 1999/038745

(56) References cited:
- EP-A- 0 163 500
- EP-A- 0 546 807
- DE-C- 810 345
- DE-U- 29 621 744
- GB-A- 2 109 065
- US-A- 2 762 199
- US-A- 3 393 510
- US-A- 3 431 729
- KLASCHE: "Elektronik in BMW-Autos" FUNKSCHAU., vol. 50, no. 14, June 1978, MUNCHEN DE, pages 673-675, XP002076627

## Description

The invention relates to an oil pressure operated brake safety system for a vehicle having a master cylinder and a plurality of wheel cylinders, wherein one safety detector per wheel cylinder is attached between a master cylinder and each wheel cylinder wherein each safety detector comprises a first cylinder with a first piston, said first piston separating the master cylinder from the wheel cylinders.

The document DE 296 21 744 U1 discloses control devices for a brake system of a vehicle, which are connected to the main cylinders of a dual-circuit brake system. The control devices don't give any precise information about the spot of a failure.

The EP O 546 807 A1 and the GB 2 109 065 A show friction-pad wear-limit warning devices for disc brakes of a vehicle, wherein a probe juxtaposed with the brake pad detects the residual thickness of the pad worn by contact with the disc rotor, so that a warning signal can be generated before the brake pads are over-worn.

The document US 3,393,510 A discloses a compound brake system for a vehicle having a master cylinder and a plurality of wheel cylinders, wherein one safety device per wheel cylinder is attached between the master cylinder and each wheel cylinder. Each safety device comprises a first cylinder with a first piston separating the master cylinder from the wheel cylinders. If one or more brakes in individual wheels should cease to operate, the safety device prevents the entire system from failure. Remaining brakes on unaffected wheels of the vehicle will continue to operate. But there is no warning device to inform the driver early of a failure.

Every automotive vehicle that uses oil pressure cylinder nowadays has only one way to tell driver that it has a problem: the signal when there is no oil in a master cylinder. This signal doesn't describe the problem well. Also, there is a chance of accident before if the signal is on because turned-on signal means that there was no oil in a master cylinder already. There is no way to tell which part has problem until the brake part of the automotive vehicle is uninstalled. Uninstalling the brake part is not an easy task for a driver. A driver may have an accident later unknowing what the problem is.

It is the object of the present invention to inform a driver of a vehicle as soon as possible if a failure of the brake system occure.

According to the invention it is provided that each safety detector includes a pressure electric switch of an electric system, said electric switch being connected to a signal panel for warning of a brake failure, and wherein a second cylinder is in fluid communication with the first cylinder, said second cylinder including a rubber piston operating on said electric switch. The driver will be informed in time of a failure in the brake system. When the oil pressure is lost, the rubber piston is attracted downwards, wherein the electric stick meets the electric point, resulting in turning on a warning light in the brake safety system. In a preferred variant it is provided that a first spring operates on the first piston in a normal position. The force of the first spring for at least one rear wheel may be smaller than the force of the first spring of at least one front wheel. The automotive vehicle's rear brake therefore always activates before its front brake does.

In a further variant the proposal is put forward that the brake safety system comprises electric brushes attached to the brake shoes being arranged to touch a roller disc or a drum of the brake system to generate a warning signal in the case that the shoes have been worn out. Therefore wear of brake shoes can also be monitored by the brake safety system.

This brake safety system has been designed using the fact that oil pressure applies a certain pressure always in any situation. Therefore, the parts which do not have any problem, still works in the case of brake failure since oil pressure of each cylinder has been differentiated. Also, the electric signal panel to alarm any problem is installed to help a driver realize the problem he or she might face on the road. A driver, knowing the problem can drive safety to any designated service place to get his or her automotive vehicle serviced.

The electric signal panel works using oil pressure. When a certain oil pressure is changed, the electric points will meet and alarm the problem. Furthermore, this brake safety system offers one more feature that tells a driver the time to change brake shoes of a automotive vehicle.

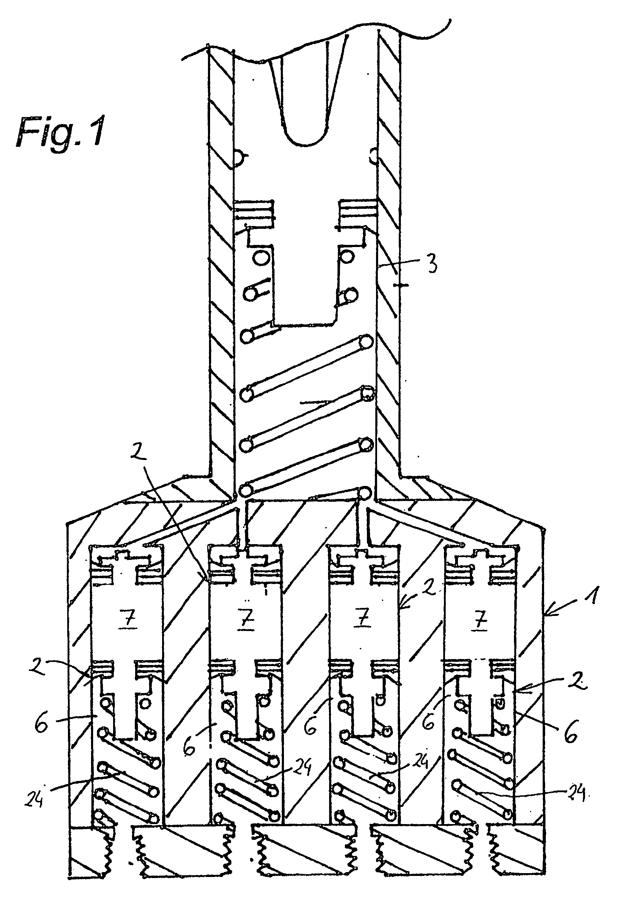

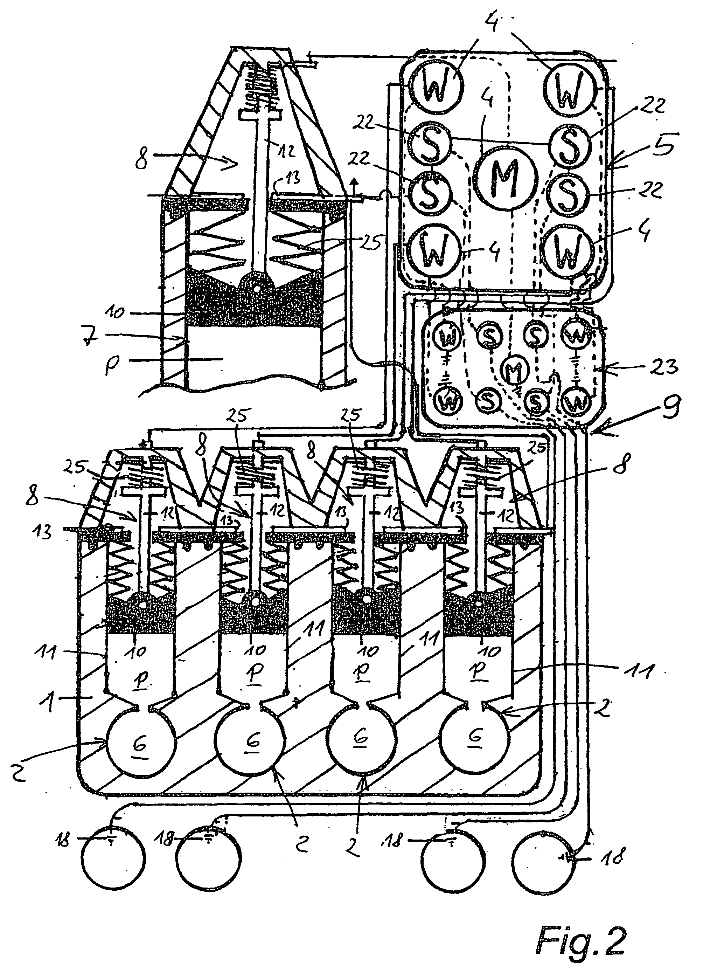

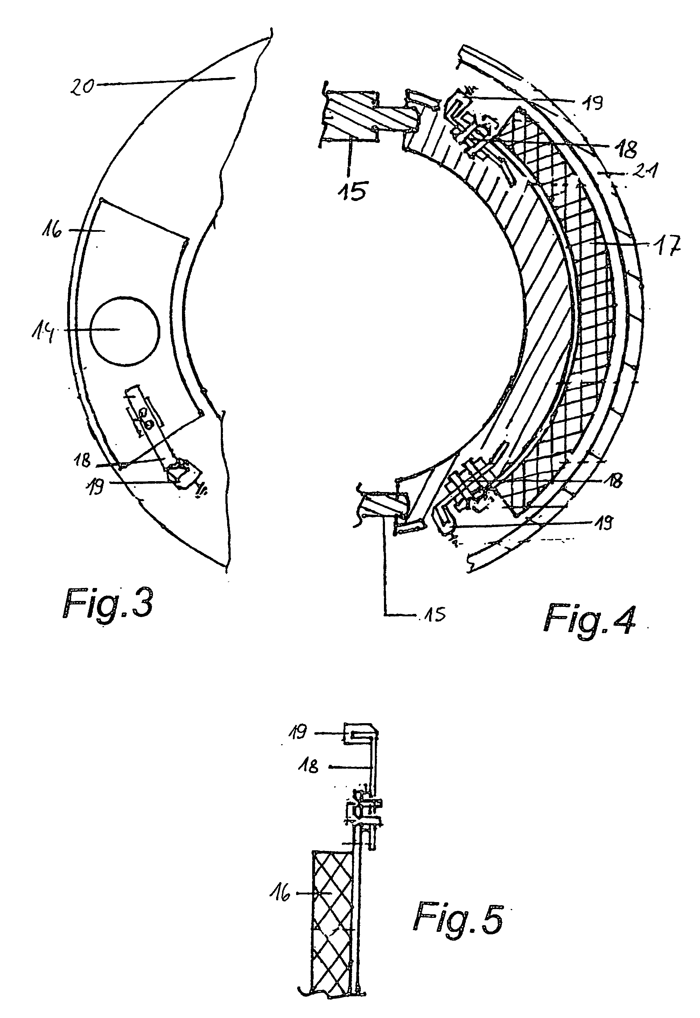

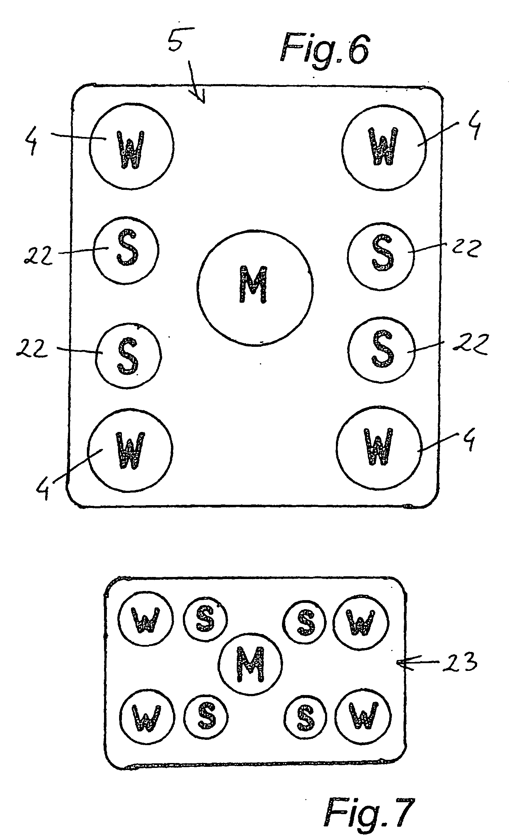

Following is a more detailed description of the invention as illustrated by the accompanying drawings, in which Fig. 1 is a schematic representation of the brake safety system in a plane view, Fig. 2 represents the brake safety system in a longitudinal section, Fig. 3 is a schematic view of brake shoes of a disc brake, Fig. 4 is a schematic view of brake shoes of a drum brake, Fig. 5 is a sectional view of a brake shoe shown in Fig. 3, Fig. 6 is a schematic view of a signal panel installed in driver's side and Fig. 7 is a schematic view of an alarm system installed in driver's side.

This innovative brake safety system 1 prevents accidents caused by mechanical failure of brake system by letting the driver of the automotive vehicle to see if the brake system has problem and making the driver safely drives to a designated service place after realizing the brake system failed.

This brake safety system 1, compared to any current brake system which cannot detect brake failure and cannot signal the problem to the driver, is designed to detect the failure by attaching safety detectors 2 between master cylinder 3 and every other wheel cylinder 14, 15, and differentiating oil pressure for each wheel cylinder 14, 15.

By having safety detectors 2, a driver is able to find out he or she has any brake problem when a signal from any detectors is on. The signal is operated by differentiated oil pressure p. The change of oil pressure p sends warning light 4 when any wheel doesn't operate property.

Every automotive vehicle that uses oil pressure cylinder nowadays has only one way to tell driver that it has a problem: the signal when there is no oil in a master cylinder 3. This signal doesn't describe the problem well. Also, there is a chance of accident before the signal is on because turned on signal means that there was no oil in a master cylinder 3 already. To prevent an accident happens, the brake safety signal panel 5 is installed in a driver's side and lets the driver see and find out if his or her brake system has problem.

The application of this invention lets a driver know if there is problem in the brake system and finds out exactly which brake is not operating properly using an electric system 9 with a pressure sensitive electric switch 8 which is operated by oil pressure of each cylinder 3, 14, 15.

This invention uses the fact that oil pressure always has constant oil pressure in any kind of place.

Oil pressure applied to a master cylinder 3 is sent to the brake safety system 1. This pressure is separated to each first cylinder 6 in the brake safety system 1. Then the pressure separated to each first cylinder 6 pushes a first piston 7 in each first cylinder 6. The first pistons 7 cuts off oil pressure from master cylinder 3 so that the oil pressure from a master cylinder doesn't go right through wheel cylinder 14, 15. It sends the oil pressure p in the brake safety system 1 to wheel cylinder 14, 15.

In any automotive vehicle, if a brake system of the automotive vehicle is operated by oil pressure, the brake safety system 1 has same number of safety detectors 2 as the number of wheel cylinders 14, 15 in the automotive vehicle. Then the oil pressure p of each cylinder in the automotive vehicle acts independently whether the cylinder is master cylinder 3 or wheel cylinder 14, 15. The oil pressure p pushes the first pistons 7 arranged in first cylinders 6, and the first pistons 7 send their oil pressure p to each wheel cylinder 14, 15.

The number of brake safety detector 2 will be decided by the fact that an automotive vehicle has how many wheel cylinders 14, 15. If an automotive vehicle has four wheel cylinders 14, 15, there will be four safety detectors 2. If an automotive vehicle has six or ten wheel cylinders 14, 15, there will be six or ten safety detectors 2 respectively. Thus even if an automotive vehicle has more than twenty wheel cylinders 14, 15, an automotive vehicle will have the same number of safety detectors 2, and a driver will have no problem finding out which wheel is not working.

With this brake safety system 1, automotive vehicle's rear brake always activates before its front brake does. It does because this system uses the fact that oil pressure p applies to the weaker first spring 24 first while strong and weak first springs 24 push the first piston 7 back. Thus, if rear brake activates first using the pressure of the first spring 24, an automotive vehicle remains still when brake system activates. If an automotive vehicle has six wheels, the brake system activates from the most rear wheel to the front wheel. This procedure makes a automotive vehicle remain still while a driver applies brake suddenly.

Also, this brake safety system 1 makes oil in a master cylinder 3 or safety detectors 2 not to leak out. Thus when a driver caused motor accident and the automotive vehicle is tumbled over, oil doesn't leak out from the cylinders 3, 6. Also when an automotive vehicle is fallen into the water, water doesn't go into a cylinder 3, 6. All these makes a driver safely drive to a designated service place while not having to worry about towing the automotive vehicle because he or she cannot drive the automotive vehicle since the oil leaked out or water came in.

The reason to turn on the light 4 of the brake safety system 1 which is a electric system, is to signal warning of brake failure when certain oil pressure p is lost accidentally or naturally over time. When the oil pressure p is lost, vacuum is created, and this vacuum will attract rubber piston 10 in a second cylinder 11 downward (Fig. 2). When rubber piston 10 is pushed down against the force of a second spring 25, a minus electric stick 12 of the electric switch 8, which is placed between rubber piston 10 also goes down and meets a plus electric point 13. This electric meeting results in turning on of the light 4 in signal panel 5 of the brake safety system 1. When this happens, a driver finds out which of master cylinder 3 or wheel cylinder 14, 15 is not working by viewing where the light 4 is on in a signal panel 5. Also, the light 4 is on only when a driver applies brake and a driver finds out oil pressure p is disappearing from either master 3 or wheel cylinder 14, 15. Furthermore, if the light 4 is on in a safety signal panel 5 when a driver tries to start the engine, either master 3 or wheel cylinder 14, 15 has already failed and will not work.

Another feature of the brake safety system 1 is its ability to tell a driver when to change brake shoes 16, 17. Until now, automotive vehicles have been making unpleasant noise when their brake shoes 16, 17 are worn out. This noise harm ears of other drivers and the driver of the automotive vehicle. Also, even though automotive vehicle has electric system for its brake shoes 16, 17, the system is not moveable so that if the shoes wear out, the braking force goes to roller disc 20 an drum 21. Then the damage is done to either roller disc or drum, and brake shoes 16, 17. Furthermore, until a driver or a service person takes off wheel and inspects a brake, no one knows when the shoes have to be replaced. Thus, this brake safety system 1 uses electric brushes 18 with a metal plate 19 to bend semi-circle to prevent applied braking force from harming roller disc 20 or drum 21. This innovative brake safety system 1, using electricity, will check front and rear brake shoes 16, 17 and tell when to replace them. When the shoes 16, 17 are to be replaced, the light 22 of the brake safety system 1 will be on again. Also there is an alarming system 23 attached to each shoes 16, 17 so that when shoes 16, 17 wear out, a driver or passenger can identify the problem with eyes and ears.

In a brake safety system 1, there are electric brushes 18 with spring, which will touch drum 21 or roller disc 20 when the brake shoes 16, 17 have been worn out. These electric brushes 18 will then, signal to the panel 5 warning that it is time to replace them. The electric systems of the brake safety system 1 has been separated between shoes 16, 17 and wheel cylinder 14, 15 so that a driver is able to find out which part has problem. Also, knowing the cause of the problem, he or she will drive in safe manner. A drive can protect him or her from the accident knowing what the problem is.

This brake safety system 1 can be installed in all the automotive vehicles, which uses oil pressure p. Also, because a driver will know when to change the brake shoes 16, 17, money can be saved. This brake safety system 1 will make drivers able to find out if their automotive vehicle's brake works property all the time. Even if one or four wheel cylinders 14, 15 fail, rest three cylinders 14, 15 will be able to work properly so that bigger accident can be prevented and other mechanical accidents can be prevented 100% by having this safety system.

## Claims

1. Oil pressure operated brake safety system (1) for a vehicle having a master cylinder (3) and a plurality of wheel cylinders (14, 15), wherein one safety detector (2) per wheel cylinder (14, 15) is attached between a master cylinder (13) and each wheel cylinder (14, 15), wherein each safety detector (2) comprises a first cylinder (6) with a first piston (7), said first piston (7) separating the master cylinder (3) from the wheel cylinders (14, 15), **characterized in that** each safety detector (2) includes a pressure electric switch (8) of an electric system (9), said electric switch (8) being connected to a signal panel (5) for warning of a brake failure, and wherein a second cylinder (11) is in fluid communication with the first cylinder (6), said second cylinder (11) including a rubber piston (10) operating on said electric switch (8).

2. Brake safety system (1) according to claim 1, **characterized in that** a first spring (24) operates on the first piston (7) in a normal position.

3. Brake safety system (1) according to claim 2, **characterized in that** the force of the first spring (7) for at least one rear wheel is smaller than the force of the first spring (7) for at least one front wheel.

4. Brake safety system (1) according to one of the claims 1 to 3, **characterized in that** the electric switch (8) comprises an electric stick (12) attached to the rubber piston (10), wherein said electric stick (12) meets an electric point (13) on one end position of the rubber piston (10).

5. Brake safety system (1) according to one of the claims 1 to 4, **characterized in that** the brake safety system (1) comprises electric brushes (18) attached to the brake shoes (16, 17) being arranged to touch a roller disc (20) or a drum (21) of the brake system to generate a warning signal in the case that the shoes (16, 17) have been worn out.

## Patentansprüche

1. Mit Öldruck betriebenes Bremssicherheitssystem (1) für Fahrzeuge, mit einem Hauptzylinder (3) und mehreren Radzylindern (14, 15), wobei pro Radzylinder (14, 15) ein Sicherheitssensor (2) zwischen einem Hauptzylinder (13) und jedem Radzylinder (14, 15) befestigt ist, wobei jeder Sicherheitssensor (2) einen ersten Zylinder (6) mit einem ersten Kolben (7) umfasst, und dieser erste Kolben (7) den Hauptzylinder (3) von den Radzylindern (14, 15) trennt, **dadurch gekennzeichnet, dass** jeder Sicherheitssensor (2) einen elektrischen Druckschalter (8) eines elektrischen Systems (9) umfasst, wobei der elektrische Schalter (8) an einer Signaltafel (5) zur Meldung eines Schadens an den Bremsen angeschlossen ist und wobei ein zweiter Zylinder (11) mit dem ersten Zylinder (6) strömungsverbunden ist und der zweite Zylinder (11) einen Gummikolben (10) umfasst, der auf diesen elektrischen Schalter (8) einwirkt.

2. Bremssicherheitssystem (1) nach Anspruch 1, **dadurch gekennzeichnet, dass** eine erste Feder (24) in einer normalen Position auf den ersten Kolben (7) wirkt.

3. Bremssicherheitssystem (1) nach Anspruch 2, **dadurch gekennzeichnet, dass** die Kraft der ersten Feder (24) für mindestens ein Hinterrad geringer ist als die Kraft der ersten Feder (24) für mindestens ein Vorderrad.

4. Bremssicherheitssystem (1) nach einem der Ansprüche 1 bis 3, **dadurch gekennzeichnet, dass** der elektrische Schalter (8) einen an dem Gummikolben (10) befestigten elektrischen Stab (12) umfasst, wobei der elektrische Stab (12) an der einen Endstellung des Gummikolbens (10) auf einen elektrischen Punkt (13) trifft.

5. Bremssicherheitssystem (1) nach einem der Ansprüche 1 bis 4, **dadurch gekennzeichnet, dass** das Bremssicherheitssystem (1) elektrische Bürsten (18) aufweist, die an den Bremsbacken (16, 17) befestigt sind, welche derart angeordnet sind, dass sie zur Erzeugung eines Warnsignals bei Verschleiß der Backen (16, 17) eine umlaufende Scheibe (20) oder eine Trommel (21) des Bremssystems berühren.

## Revendications

1. Système de sécurité de frein à commande hydraulique (1) pour véhicule, comportant un maître-cylindre (3) et un certain nombre de cylindres de roues (14, 15), dans lequel un détecteur de sécurité (2) par cylindre de roue (14, 15) est monté entre un maître-cylindre (13) et chaque cylindre de roue (14, 15), chaque détecteur de sécurité (2) comprenant un premier cylindre (6) muni d'un premier piston (7), ce premier piston (7) séparant le maître-cylindre (3) des cylindres de roues (14, 15),
**caractérisé en ce que**
chaque détecteur de sécurité (2) comprend un commutateur électrique de pression (8) faisant partie d'un système électrique (9), ce commutateur électrique (8) étant connecté à un panneau de signalisation (5) pour avertir d'une panne de freinage ; et
un second cylindre (11) est en communication de fluide avec le premier cylindre (6), ce second cylindre (11) comprenant un piston de caoutchouc (10) agissant sur le commutateur électrique (8).

2. Système de sécurité de frein (1) selon la revendication 1,
**caractérisé en ce qu'**
un premier ressort (24) agit sur le premier piston (7) dans une position normale.

3. Système de sécurité de frein (1) selon la revendication 2,
**caractérisé en ce que**
la force du premier ressort (24) pour au moins une roue arrière, est inférieure à la force de ce premier ressort (24) pour au moins une roue avant.

4. Système de sécurité de frein (1) selon l'une des revendications 1 à 3,
**caractérisé en ce que**
le commutateur électrique (8) comprend un bâtonnet électrique (12) fixé au piston de caoutchouc (10), ce bâtonnet électrique (12) rejoignant un point électrique (13) sur une position d'extrémité du piston de caoutchouc (10).

5. Système de sécurité de frein (1) selon l'une des revendications
**caractérisé en ce que**
le système de sécurité de frein (1) comprend des balais électriques (18) fixés aux sabots de frein (16, 17), en étant disposés pour toucher un disque de roulement (20) ou un tambour (21) du système de frein, de manière à générer un signal d'avertissement dans le cas où les sabots (16, 17) ont été usés.
